Europäisches Patentamt

(19) European Patent Office

Office européen des brevets

(11) Publication number: 0 085 528
A2

# (12) EUROPEAN PATENT APPLICATION

(21) Application number: 83300367.6

(22) Date of filing: 25.01.83

(51) Int. Cl.³: G 02 B 7/26

(30) Priority: 03.02.82 CA 395508

(43) Date of publication of application:
10.08.83 Bulletin 83/32

(84) Designated Contracting States:
DE FR GB NL SE

(71) Applicant: NORTHERN TELECOM LIMITED
1600 Dorchester Boulevard West
Montreal Quebec H3H 1R1(CA)

(72) Inventor: Finn, Roger Colin
56 Meadowbank Drive
Nepean Ontario, K26 0N9(CA)

(72) Inventor: MacKenzie, Morley Scott
P.O. Box 1401 1233 Colonel By Drive
Ottawa Ontario K1S 5B7(CA)

(74) Representative: Crawford, Andrew Birkby et al,
A.A. THORNTON & CO. Northumberland House 303-306
High Holborn
London WC1V 7LE(GB)

(54) Optical fiber splice.

(57) An optical fiber splice comprises two coated fibers (50, 51) generally of fused silicon, fusion spliced end-to-end. The coating (52, 53) is removed from the ends of the fibers for a short distance prior to fusion. After fusion the uncoated ends and a short length of coated fiber, each side of the fusion joint, are encased in a synthetic resin (55). Conveniently, the resin is molded about the fibers and is cured by radiation, such as UV light, bright visual light and ion bombardment. The resin may contain reinforcement material (56).

FIG. I

EP 0 085 528 A2

OPTICAL FIBER SPLICE

The present invention provides a splice for a pair of optical fibers which are fused end-to-end, the splice being encased in a sheath of synthetic resin, which may incorporate finely divided strengthening material. The coating of each fiber is removed for a short distance from the end of the fiber, prior to fusion. After fusion, the uncovered ends, plus a portion of the coating on each fiber, are encased in the resin material. The encasing can be carried out by molding, or manually by laying the spliced fibers on a layer of the resin, more resin brushed over and then the resin cured. It is a feature of the invention that the resin is one which is cured by irradiation, for example by ion bombardment, ultra violet (UV) light or visible light. Pretreatment of the fiber coating, and the bare fiber itself, with a surface reactant, e.g. a silicone primer, may be provided, for a silicone coated fiber. The invention will be readily understood by the following description of an embodiment, with modifications thereto, in conjunction with the accompanying drawings, in which:-

Figure 1 is a plan view of one of two molds for encasing a spliced pair of fibers; the two molds identical;

Figure 2 is a side view in the direction of arrow A;

Figure 3 is a cross-section on the line III-III of Figure 1;

Figures 4 and 5 are plan and end views respectively of a top pressure member;

Figure 6 is a cross-section on the line VI-VI of Figure 4;

Figures 7 and 8 are plan and end views respectively of a bottom pressure member;

Figure 9 is a cross-section on the line IX-IX of Figure 7;

Figure 10 is a side view of a pressurizing jig;

Figure 11 is an end view of the jig of Figure 10;

Figure 12 is a top plan view of the jig of Figures 10 and 11;

Figure 13 is a diagrammatic cross-section of a splice.

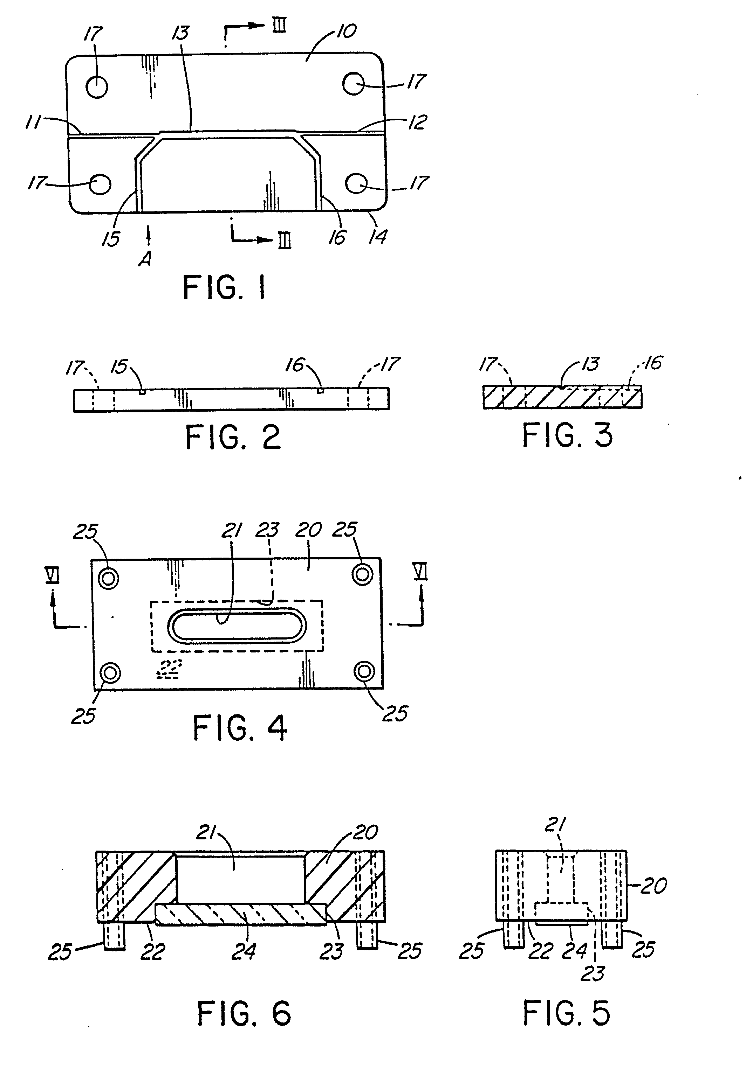

Figures 1, 2 and 3 illustrate one of the molds used for encasing a spliced pair of fibers by injection of the reinforced resin. The two molds are identical and conveniently are of silicone, being themselves molded from a master mold. In the face of each mold 10 is a longitudinally extending groove having end portions 11 and 12 and a central portion 13. Extending from one side 14 are two further grooves 15 and 16, the grooves extending to the junctions between the central portion 13 and end portions 11 and 12.

The end portions 11 and 12 are semi-circular in cross-section and of a diameter to be a close fit on a coated portion of a fiber end. The central portion 13 is also of semicircular cross-section and of a somewhat larger diameter than that of the end portions. As an example, end portions 11 and 12 can be .010 inches diameter and the central portion .025 inches diameter, although these dimensions may vary with different diameters of fiber. Due to the compressability, and flexibility, of the molds, some variation in fiber diameters can be accommodated, with relation to end portions 11 and 12. The maximum diameter of the central portion 13 is dictated by equipment, i.e. cabling, requirements. Each mold also has four location holes 17 positioned towards each corner. The holes differ in each mold, the holes in one mold of slightly smaller diameter than the other mold, as will be explained.

Two molds, as in Figures 1, 2 and 3 are held in face to face opposition, the end portions 11 and 12 forming cylindrical bores and center portion 13 forming a cylindrical cavity. The grooves 15 and 16 also form cylindrical, or rectangular, bores, to act as entry and exit gates to the central portion 13. If the molds, as in the present example, are of flexible silicone, then they are supported on top and bottom rigid support plates, typically of metal.

Figures 4, 5 and 6 illustrate a top plate 20. The plate 20 is rectangular, generally of the same dimensions as a mold and has a central aperture 21 extending completely through. On a front face 22 a recess 23 is formed, extending around the aperture 21. Positioned in the recess 23 is a fused quartz window 24. Extending from the front face 22 are four locating members 25. The locating members 25 are hollow, and conveniently are formed by drilling holes in the plate 20 and inserting tubes, the tubes being a force fit. The locating members extend a distance equal to the thickness of a mold, and are of a diameter to be a close fit in the location holes 17 in a mold. The mold fitting on the top plate is the one with the larger diameter location holes. The mold is preferably attached to the plate 20 by treating the back surface of a mold with a primer and then coated with a UV cured resin. This gives a fairly weak bond but is sufficient to hold the mold in position.

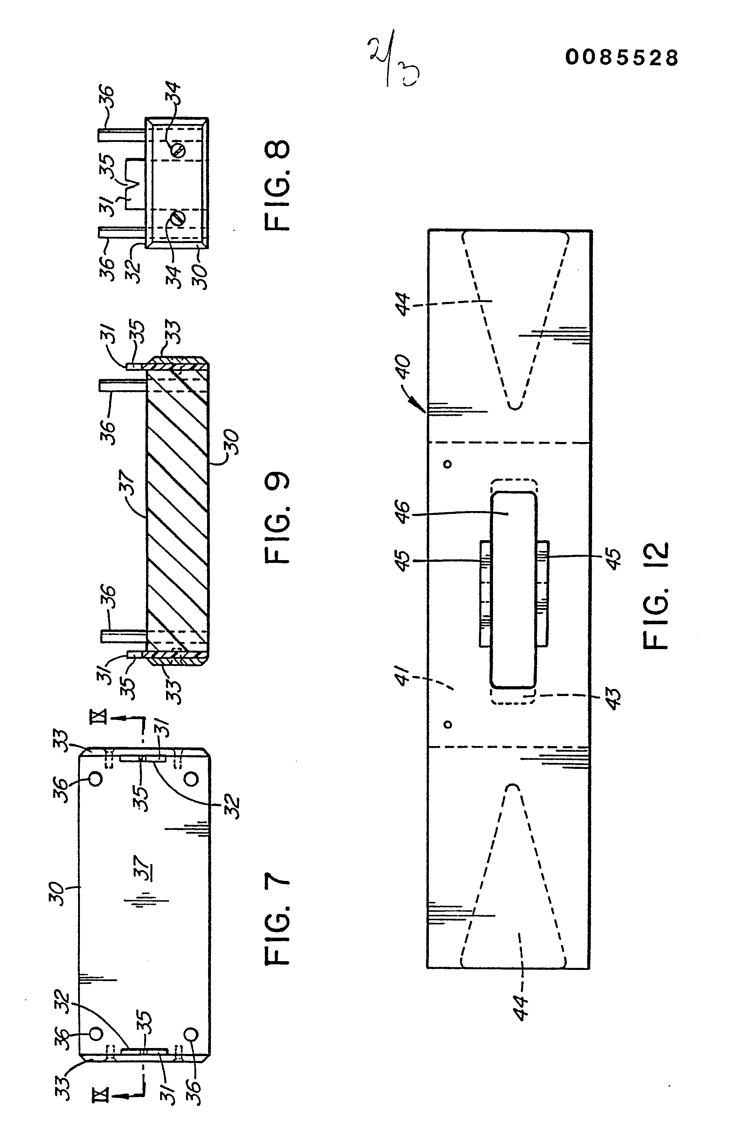

Figures 7, 8 and 9 illustrates a bottom plate 30. The bottom plate is also rectangular and at each end a positioning member 31, for example of neoprene, extends upward. For convenience, the positioning members are separate members, fitting into grooves 32 in the ends of the plate and held in position by end plates 33 held in position by screws 34. The positioning members have Vee grooves 35 extending down from their outer ends. Also extending up from the front face 37 are locating members 36. Locating members 36 are positioned to fit in the bores of the hollow locating members 25 of the top plate. A mold is attached to the front face 32 of the bottom plate, again by treating with a primer and the use of a UV cured resin. The mold attached to the bottom plate has smaller diameter holes 17, to be a close fit over the locating members 36.

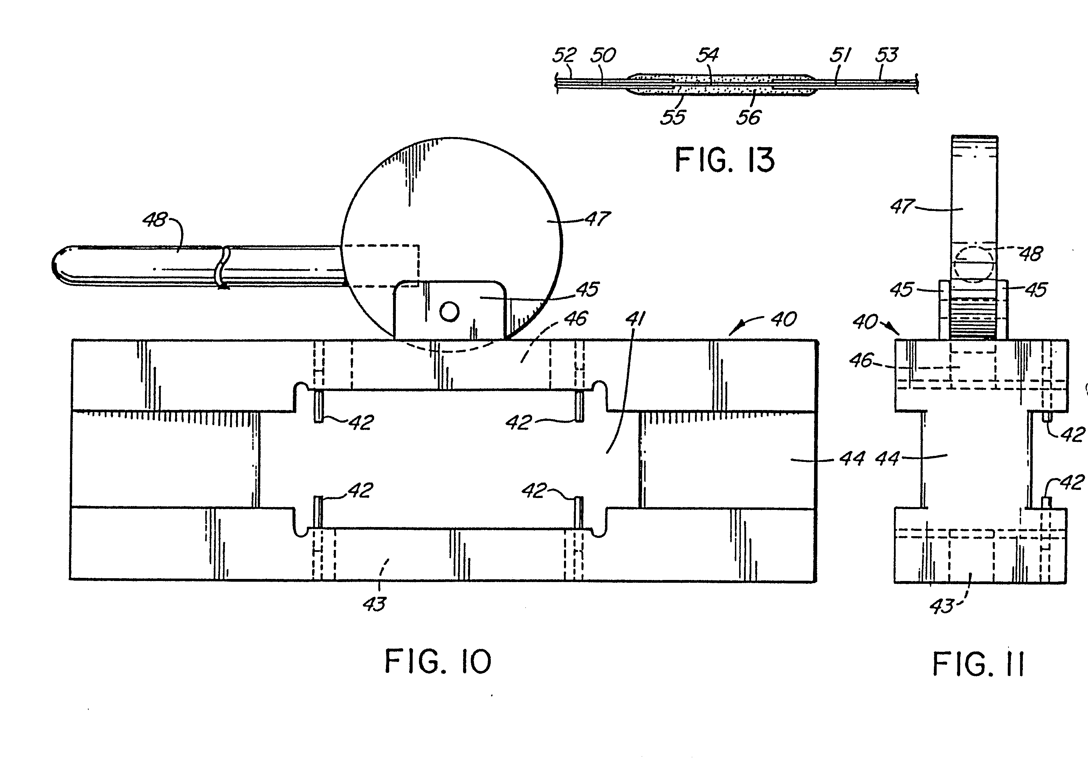

In one method of encasing two spliced fibers, the spliced fibers are positioned between two molds, the molds and the top and bottom support plates inserted into a clamping device. One form of clamping device is illustrated in Figures 10, 11 and 12. The clamping device, indicated generally at 40, comprises a rectangular block having a central cavity 41 therein. The cavity 41 is dimensioned such that the molds and top and bottom plate can be slid laterally into the aperture 41. Four locating pins 42 extend into the aperture, two from the top and two from the bottom. The pins limit the movement of molds and plates into the cavity and position molds and plates. An aperture 43 is formed in the bottom of the clamping device, extending through to the cavity. The aperture 43 exposed the window 24 in the bottom plate. The portions 44 of the clamping device at each end are tapered inwards, to provide access for the fibers and to prevent sharp bends in the fibers.

0085528

Two spaced apart webs 45 extend up from the top surface of the clamping device and a slot 46 extends through the top into the cavity 41, between the webs 45. A cam member 47 is pivotted between the webs 45, the cam having a handle 48. When the molds and plates are in position in the cavity 41, they are pressed together by rotation of the cam member 47, the cam extending down through the slot 46 into contact with the bottom plate. The cam member 47 and handle 48 are omitted from Figure 12 for clarity.

When the molds and support plates are in position, the resin is injected, by means of a syringe, into one of the grooves 15 or 16. One groove serves as the injection inlet while the other groove acts as a vent. When resin is seen to fill the central portion 13 without bubbles being present in the resin, as observed through the quartz window, then injection is ceased.

After injection, the resin is cured by radiation. Radiation of the resin occurs through the aperture 43, window 24, aperture 21 and through the mold. The radiation can be of variable form. Thus there can be ion bombardment, ultra-violet light or visible light, the resin being selected to suit. As an example an ultra-violet cured resin is one supplied by Summers Laboratory Inc., with the name UV-74 Lensbond Cement, this being a polyester resin, cured by ultra-violet light. The resin may be used "unreinforced" or a reinforcing material can be mixed in, for example mica, carbon, glass. The reinforcing material is usually granular, passing through a 160 sieve, the material having a maximum dimension of about .004". However glass fiber in very short lengths has also been used and

0085528

carbon fibers can also be used. Different strengthening materials appear to be more suitable to certain resins. Thus mica is very good with polyester, carbon with polyacrylate and epoxy resins. The strengthening material and resin combination can be varied to suit the desired results.

Instead of injecting the resin, or mixture of resin and reinforcement, it can be done by hand. Thus the resin, or resin mixture, can be brushed on to a mold, as in Figures 1, 2 and 3, the spliced fibers positioned on the mold, more resin brushed on and then the other mold positioned over. Pressure can be applied and the resin cured by radiation. Alternatively, after positioning the spliced fibers on the brushed on resin, or resin mixture, and brushing on further resin or mixture, the resin can then be cured without pressure. The final splices will not be as uniform or clean as when the resin is injected, but emergency protection and strengthening of a splice can be provided easily.

In the example described, a separate mold and support plate has been provided. The mold can easily be made by molding silicone in a metal master mold member. The silicone does not adhere to the metal and is readily removed. Thus one master mold member can be used to produce numerous silicone molds. The silicone is transparent to the radiation, although the level of transparency may vary. However the mold, item 10 of Figures 1, 2 and 3, can be made of other materials, provided the mold, or at least that part encompassing the splice area, is transparent to whatever radiation is used for curing, and it is possible to check for bubbles in the resin in the center portion, as described above.

The resin used, as stated, can vary, and be cured by any convenient form of radiation, the resin selected to suit the radiation, or vice-versa. The reinforcement, if used, can also vary, varying with the resin used and the method by which the resin is applied, i.e. injection or brushing, or other. While a clamping jig has been described, other means of clamping can be used. The material of the molds too can vary with the resin used.

While silicone does not normally adhere to metal, and other materials, it is possible to obtain a bond between silicone and another material by using a silicone primer, for example one supplied by General Electric with the reference number SS4155. The resins are normally at essentially room temperature, although some temperature rise can occur in the resin during curing due to an exothermic reaction.

An example of making a reinforced splice, using the apparatus as described, and illustrated, is as follows. Prior to splicing a pair of optical fibers, the coating is stripped from the end of each fiber, the fibers then being cleaved, in a known manner, leaving a predetermined length of uncoated fiber. The fibers are then positioned in a fusion splicing apparatus, the cleaved ends of the fibers in opposition. The fibers are then fused by an arc. One form of fusion splicing apparatus is described in U.S. patent no. 4,274,707.

After fusion, the spliced fibers are positioned on a mold as in Figures 1, 2 and 3, and a further mold positioned over the splice. The coated fibers rest in the grooves 11 and 12, while the splice is approximately central in the portion 13. The coating on each fiber extends part way into the portion 13. Prior to positioning of the fibers in the molds, the ends of the coating layers, and the uncoated glass fiber, are coated, as by brushing, with a silicone primer. After closing of the molds, they are positioned in the clamping jig and polyester resin, with strengthening additive, injected into the grooves, for example into groove 15. Air escapes from groove 16 and when bubbles are no longer seen in the center portion 13, injection is stopped. Excess resin emits from groove 16. Radiation is then applied through the aperture 43 and window 24 to cure the resin. Curing time is in accordance with the particular instructions for the resin selected, and the strength of the radiation source.

After curing, the molds, and support plates, are removed from the clamping jig, the molds separated and the encased splice removed. Any flash and the sprews caused by the grooves 15 and 16 are removed.

Some typical results are as follows: The figures are for a fused fiber having a silica diameter, for core and cladding, of 125 microns.

| Reinforcement* | Resin | Approx. Load (grams) |
|---|---|---|
| 25% mica | UV-74 polyester | 1432 |
| 35% mica | UV-74 polyester | 1622 |
| 40% mica | UV-74 polyester | 1332 |
| 35% carbon | UV-74 polyester | 400 |
| 30% mica | 044 polyurethene | 984 |
| 40% mica | 044 polyurethene | 837 |
| Nil | UV-74 polyester | 1300 |

A 40% reinforcement in UV-74 polyester applied by hand, that is not injected, as described above, gave a load of 1100 grams. The load is that to cause fracture of the splice, or a fiber within the encasement. The tolerances represent the extreme values within which all the tested samples fell. As stated, another resin is a polyacrylate.

The invention can be used with all of the conventional glass fibers, that is those made from fused silica and those made from other glasses. The invention can also be applied to non-glass fibers. For the values given above, the length of the center portion 13 was 1 1/4". With a shorter length the strength reduces sharply. The maximum length is determined by the necessity to feed the fiber round bends and any additional strength is usually not necessitated. For a fiber as described above, it is considered that a length of from about 1" to about 1 1/4" would be the optimum for strength and flexibility requirements.

Examples of other resins which can be used are:-polyacrylate by L.D. Caulk Co., which is visible light curable;

polyurethane by DeSoto, UV cured; and expoxides by General Electric, which are visible light cured.

Figure 13 illustrates very diagrammatically a typical splice, as produced by the invention, in longitudinal cross-section. One fiber is indicated at 50 and another fiber at 51. The coating layers are indicated at 52 and 53 respectively. The fusion point is shown at 54 and the encasing resin at 55. In the example reinforcing material is illustrated at 56, although this reinforcing material need not be provided.

CLAIMS:

1. An optical fiber splice joining two optical fibers, each having a plastic coating layer, in an end-to-end relationship, comprising; two optical fibers fused end-to-end, characterised by the coating layer (52, 53) being removed from the end of each fiber (50, 51) for a predetermined distance prior to fusion; and

a synthetic resin (55) encasing the fused ends, the resin extending over the uncoated ends of the fibers and over a predetermined length of the coating layer of each fiber.

2. A splice as claimed in claim 1, characterised by the resin (55) incorporating finely divided reinforcing material (56).

3. A splice as claimed in claim 1 or 2, characterised by the resin (55) being a radiation cured resin.

4. A splice as claimed in claim 3, characterised by the resin (55) being by ultra violet light, by visible light or by ion bombardment.

5. A splice as claimed in claim 2, characterised by the reinforcing material (56) being of granular form.

6. A splice as claimed in claim 2, characterised by the reinforcing material (56) being of short lengths of fiber.

0085528

7.- A splice as claimed in claim 2, characterised by the reinforcing mixture (56) being mica, carbon or glass.

8. A splice as claimed in any one of claims 1 to 7, characterised by the resin (55) being a polyester, a polyurethane, a polyacrylate or an epoxide.

9. A splice as claimed in any one of claims 1 to 8, characterised by the length of the encasement being between about 1" and about 1 1/4".

10. A method of splicing two coated optical fibers, end-to-end, characterised by:

removing the coating (52, 53) from an end of each fiber (50, 51), for a predetermined length;

fusion splicing the fibers in end-to-end relationship;

and encasing the fused fiber ends in a synthetic resin (55), the resin extending over the uncoated ends of the fibers (50, 51) and over a predetermined length of the coating (52, 53) on each fiber.

11. A method as claimed in claim 10, characterised by mixing a reinforcing material (56) into the resin (55) prior to encasing the fiber ends.

12. A method as claimed in claim 10 or 11, characterised by the resin (55) being a radiation cured resin, including the step of irradiating the resin after encasing the fused ends of the fibers.

13. A method as claimed in claim 10, 11 or 12 characterised by positioning the fused fibers (50, 51) on a bottom mold (10), and positioning a top mold (10) on the bottom mold, the molds having opposed surfaces and a longitudinal groove on each opposed surface, each groove having a center portion (13) and end portions (11, 12), the end portions (11, 12) being a close fit on the coated portions of the fibers (50, 51) and the center portion (13) being of an enlarged diameter relative to the end portions; clamping the molds (10) together; and injecting the synthetic resin (55) into the center portion (13).

14. A method as claimed in claim 10, characterised by brushing the uncoated ends of the fibers (50, 51) and the predetermined lengths of the coating (52, 53) of each fiber with a primer after fusion and prior to encasing with the resin (55).

15. A method as claimed in claim 14, characterised by the coating (52, 53) being of silicone, the primer being a silicone primer.

16. Apparatus for encasing the fused opposed ends of coated optical fibers, characterised by; two molds (10), each mold having a face, the faces adapted to be positioned in opposition; a groove extending longitudinally across the face of each mold, said

14

0085528

grooves in alginment when the faces are in opposition, each groove including a center portion (13) and an end portion (11, 12) at each end of the center portion; the longitudinal grooves, in alignment, defining a cylindrical cavity and a cylindrical bore extending from each end of the cavity, the cylindrical bores being of a diameter to be a close fit on the coated fibers (50, 51), the cylindrical cavity being of a larger diameter than the bores; lateral grooves (15, 16) in each of the faces, a groove extending from each end of the cavity to a side edge of each of the molds; and means (45, 46, 47) for holding the molds (10) in opposition, while resin is injected into one of the lateral grooves (15, 16).

17. Apparatus as claimed in claim 16, characterised by each mold (10) being of a flexible synthetic material, and including two rigid support plates (20, 30), a support plate for each mold and adapted to support the molds in face-to-face position.

18. Apparatus as claimed in claim 17, characterised by a window (24) in one of the support plates (20), the window and the related mold (10) being transparent to radiation, for radiation curing of a resin in the cavity.

19. Apparatus as claimed in claim 18, the molds (10) being of silicone and the window (24) being of fused quartz.

FIG. I

FIG. 2

FIG. 3

FIG. 4

FIG. 6

FIG. 5

FIG. 7

FIG. 9

FIG. 8

FIG. 12

0085528

0085528

FIG. 10

FIG. 11

FIG. 13